# EUROPEAN PATENT SPECIFICATION

(11) **EP 3 174 164 B1**
(45) Date of publication and mention of the grant of the patent: **14.10.2020**
(21) Application number: 15747350.5
(22) Date of filing: 09.02.2015
(51) Int. Cl.: G06K 13/08, H01R 27/02, G06K 7/00

(54) **TF CARD CONNECTOR CAPABLE OF INSTALLING NANO-SIM CARD, AND MOBILE PHONE**
TF-KARTEN-ANSCHLUSS ZUR INSTALLATION VON NANO-SIM-KARTEN SOWIE MOBILTELEFON DAMIT
CONNECTEUR DE CARTE TF PERMETTANT D'INSTALLER UNE CARTE NANO-SIM, ET TÉLÉPHONE MOBILE

(30) Priority: 24.07.2014 CN 201410354980
(43) Date of publication of application: 31.05.2017
(73) Proprietor: Huizhou TCL Mobile Communication Co., Ltd., Huizhou, Guangdong 516006 (CN)
(72) Inventor: WEI, Jinping, HuiZhou Guangdong 516006 (CN); GUO, Yanshun, HuiZhou Guangdong 516006 (CN)
(74) Representative: Petraz, Gilberto Luigi
(86) International application number: PCT/CN2015/072532
(87) International publication number: WO 2016/011807

(56) References cited:
- CN-A- 103 378 461
- CN-A- 104 124 587
- CN-U- 201 594 678
- CN-U- 202 977 848
- CN-U- 202 977 848
- KR-Y1- 200 473 528
- US-A1- 2013 288 535

## Description

### CROSS-REFERENCE TO RELATED APPLICATIONS

This application claims the benefit of PCT International Application Serial No. PCT/CN2015/072532, filed February 09, 2015, which in turn claims priority to China Patent Application No. 201410354980.5, filed July 24, 2014.

### BACKGROUND OF THE INVENTION

### Field of Invention

The present invention relates to a connector installed in the mobile phone, and more particularly to a TF card connector which is capable of installing a Nano-SIM card and a mobile phone thereof.

### Description of Prior Art

Currently, almost all mobile phones can be installed with memory cards and a widely-used memory card is the TF card. However, conventionally, the TF card connector within the mobile phone is only for inserting TF card therein, which is too simple.

U.S. Application Publication No. 2013/288535A1 discloses a dual memory card socket 100 including a micro SIM card casing 140 and a micro SD card casing 150. However, opposite longer sides of the micro SIM card casing 140 overlap corresponding opposite longer sides of the micro SD card casing 150.

CN Utility Model Patent No. 202977848U discloses a TF card/SIM card dual layer connector including a first plastic core 2, a second plastic core 3. However, opposite longer sides of the first plastic core 2 overlap corresponding opposite longer sides of the second plastic core 3.

Consequently, there is a need to solve the above problem and develop a new technique.

### SUMMARY OF THE INVENTION

Based on the aforementioned problems, one objective of the present invention is to provide a TF card and the Nano-SIM card in the TF card connector which is capable of installing a Nano-SIM card and a mobile phone thereof for increasing the functions of the TF card connector to allow the TF card connector to be installed by TF card and Nano-SIM card.

For the above-mentioned objective, the present invention employs the following technical scheme.

A TF card connector which is capable of installing a Nano-SIM card, comprises a terminal retaining base; a first card slot disposed on the terminal retaining base and adapted to a TF card, wherein the first card slot has a first longer side and a first shorter side; wherein the first longer side comprises a first portion and a second portion protruding out further to an outer side of the TF card than the first portion, and the second portion comprises a third portion; and wherein a portion of the first shorter side and the third portion of the first longer side extend in corresponding directions perpendicular to each other; a plurality of first conducting terminals disposed on the terminal retaining base, wherein a plurality of first ends of the first conducting terminals are disposed in the first card slot for connecting to the TF card and a plurality of second ends of the first conducting terminals are disposed on a first side of the terminal retaining base for connecting to a main board of a mobile phone; and wherein the first side of the terminal retaining base is parallel to the third portion of the first longer side; a second card slot disposed on the terminal retaining base and adapted to a Nano-SIM card, wherein the second card slot has a second longer side and a second shorter side, wherein corresponding portions of the second longer side and the second shorter side extend in corresponding directions perpendicular to each other; and wherein the portion of the second longer side and the portion of the first shorter side overlap each other, and the portion of the second shorter side and the third portion of the first longer side overlap each other; and a plurality of second conducting terminals disposed on the terminal retaining base, wherein a plurality of first ends of the second conducting terminals are disposed in the second card slot for connecting to the Nano-SIM card and a plurality of second ends of the second conducting terminals are disposed on a second side of the terminal retaining base for connecting to the main board of the mobile phone, wherein two sides of the second card slot and the first card slot overlap; and wherein the second side of the terminal retaining base is opposite to the first side of the terminal retaining base.

The TF card connector which is capable of installing the Nano-SIM card further comprises a Nano-SIM card identification switch disposed on the terminal retaining base, wherein the Nano-SIM card identification switch is closed when the Nano-SIM card is inserted.

The TF card connector which is capable of installing the Nano-SIM card further comprises a TF card identification switch disposed on the terminal retaining base, wherein the TF card identification switch is closed when the TF card is inserted.

In the TF card connector which is capable of installing the Nano-SIM card, the second card slot is opened and disposed on a bottom surface of the first card slot.

In the TF card connector which is capable of installing the Nano-SIM card, eight second conducting terminals are disposed on the TF card connector which is capable of installing the Nano-SIM card.

The TF card connector which is capable of installing the Nano-SIM card further comprises a pushing structure disposed on the terminal retaining base.

The TF card connector which is capable of installing the Nano-SIM card further comprises a plurality of embossment structures disposed on the terminal retaining base.

A mobile phone comprises the TF card connector which is capable of installing the Nano-SIM card described in the above-mentioned descriptions.

The invention discloses a TF card connector which is capable of installing a Nano-SIM card and a mobile phone thereof. The TF card connector is improved by arranging a Nano-SIM card connector in the TF card connector so that the functions are increased for the TF card connector. The mobile phone have the function of installing an SIM card by arranging the TF card connector capable of installing the Nano-SIM card in the mobile phone to increase the novel functions for the mobile phone such that the Nano-SIM card is used simply and conveniently after the Nano-SIM card is installed.

### BRIEF DESCRIPTION OF THE DRAWINGS

FIG. 1 is a schematic structural view of a TF card connector which is capable of installing a Nano-SIM card according to one embodiment of the present invention;
FIG. 2 is a schematic assembly view of assembling a TF card in the TF card connector which is capable of installing a Nano-SIM card according to one embodiment of the present invention;
FIG. 3 is a schematic assembly view of assembling a Nano-SIM card in the TF card connector which is capable of installing a Nano-SIM card according to one embodiment of the present invention; and
FIG. 4 is a schematic assembly view of assembling the TF card and the Nano-SIM card in the TF card connector which is capable of installing a Nano-SIM card according to one embodiment of the present invention.

### DETAILED DESCRIPTION OF THE PREFERRED EMBODIMENTS

The present invention provides a TF card connector which is capable of installing a Nano-SIM card and a mobile phone thereof. The foregoing aspects and many of the attendant advantages of this invention will become more readily appreciated as the same becomes better understood by reference to the following detailed description, when taken in conjunction with the accompanying drawings. It should be noted that the described embodiments are merely used to explain the present invention rather than limiting of the present invention.

As used here, the term "portion" is intended to mean a fragment or an entirety.

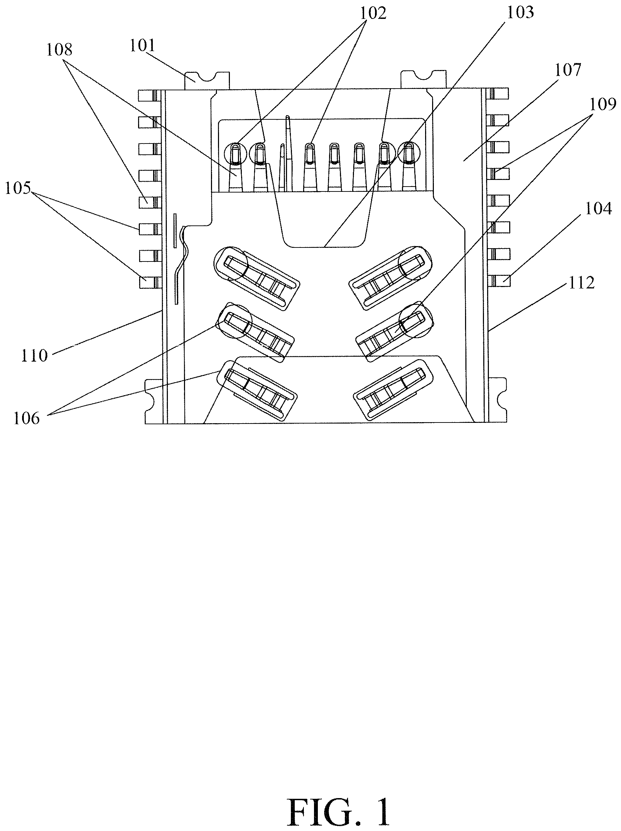

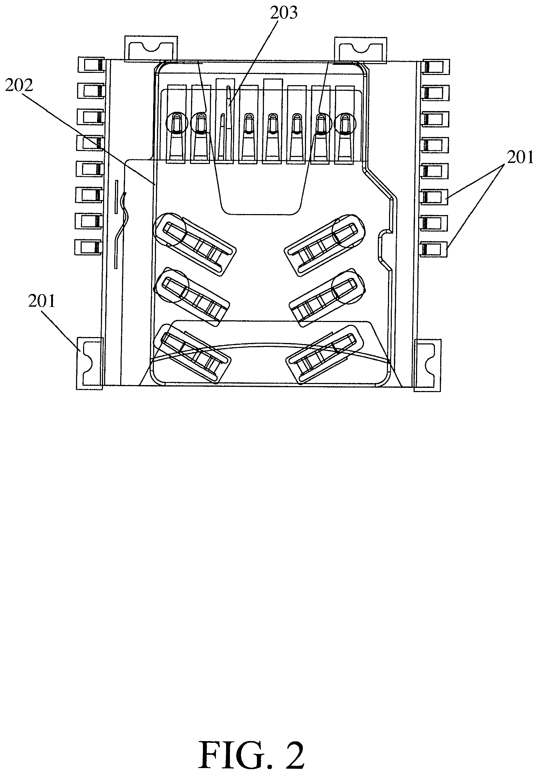

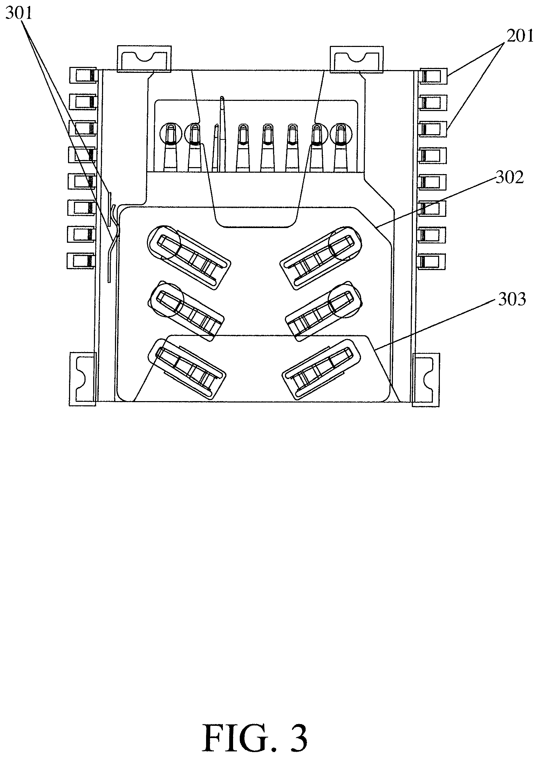

Refer to FIG. 1, which is a schematic structural view of a TF card connector which is capable of installing a Nano-SIM card 302 (shown in FIG. 3) according to one embodiment of the present invention. As shown in FIG. 1, the TF card connector which is capable of installing a Nano-SIM card 302 comprises a terminal retaining base 107, a first card slot (shown in FIG. 2) disposed on the terminal retaining base 107 and adapted to a TF card 202 (shown in FIG. 2), and a plurality of first conducting terminals 108 disposed on the terminal retaining base 107 wherein a plurality of first ends 102 of the first conducting terminals 108 are disposed in the first card slot for connecting to the TF card 202 and a plurality of second ends 105 of the first conducting terminals 108 are disposed on a first side 110 of the terminal retaining base 107 for connecting to a main board of the mobile phone.

A second card slot (shown in FIG. 3) is disposed on the terminal retaining base 107 and adapted to a Nano-SIM card 302, and a plurality of second conducting terminals 109 disposed on the terminal retaining base 107 wherein a plurality of first ends 106 of the second conducting terminals 109 are disposed in the second card slot for connecting to the Nano-SIM card 302 and a plurality of second ends 104 of the second conducting terminals 109 are disposed on a second side 112 of the terminal retaining base 107 for connecting to a main board of the mobile phone.

As the aforementioned TF card connector which is capable of installing a Nano-SIM card 302, the TF card connector is improved by arranging a Nano-SIM card connector in the TF card connector so that the functions are increased for the TF card connector.

Refer to FIG. 2, which is a schematic assembly view of assembling a TF card 202 in the TF card connector which is capable of installing a Nano-SIM card 302 according to one embodiment of the present invention. As shown in FIG. 2, the TF card connector which is capable of installing a Nano-SIM card 302 is disposed on the main board of the mobile phone. A plurality of embossment structures 101 (as shown in FIG. 1) are disposed on the terminal retaining base 107 of the TF card connector which is capable of installing a Nano-SIM card 302. The embossment structures 101, the second ends of the first conducting terminals 108 and second ends of the second conducting terminals 109 are connected to the main board of the mobile phone by way of the plastic body 201. After the TF card 202 is arranged in the TF card connector which is capable of installing a Nano-SIM card 302, the TF card 202 triggers the TF card identification switch 203 disposed on the terminal retaining base 107 for closing the TF card identification switch 203. After the TF card identification switch 203 is in the closed status, a circuit disposed in the mobile phone is switched on for generating an interrupted signal to allow the mobile phone to identify the TF card 202 while the mobile phone receives the interrupted signal.

Continuously refer to FIG. 1. In order to conveniently extract the TF card 202 from the TF card connector, a pushing structure is disposed on the TF card connector which is capable of installing a Nano-SIM card 302 wherein the pushing structure is an empty slot arranged in the TF card connector which is capable of installing a Nano-SIM card 302 such that the user is capable of contacting the TF card 202 by way of the empty slot to eject the TF card 202.

Refer to FIG. 3, which is a schematic assembly view of assembling a Nano-SIM card 302 in the TF card connector which is capable of installing a Nano-SIM card 302 according to one embodiment of the present invention. As shown in FIG. 3, after the Nano-SIM card 302 is arranged in the TF card connector which is capable of installing a Nano-SIM card 302, the Nano-SIM card 302 triggers the Nano-SIM card identification switch 301 disposed on the terminal retaining base 107 for closing the Nano-SIM card identification switch 301. After the Nano-SIM card identification switch 301 is in the closed status, a circuit disposed in the mobile phone is switched on for generating an interrupted signal to allow the mobile phone to identify the Nano-SIM card 302 while the mobile phone receives the interrupted signal. Similar to the above-mentioned pushing structure, an extracting structure 303 is disposed in the TF card connector to conveniently insert the Nano-SIM card 302 into the TF card connector or extract the Nano-SIM card 302 from the TF card connector.

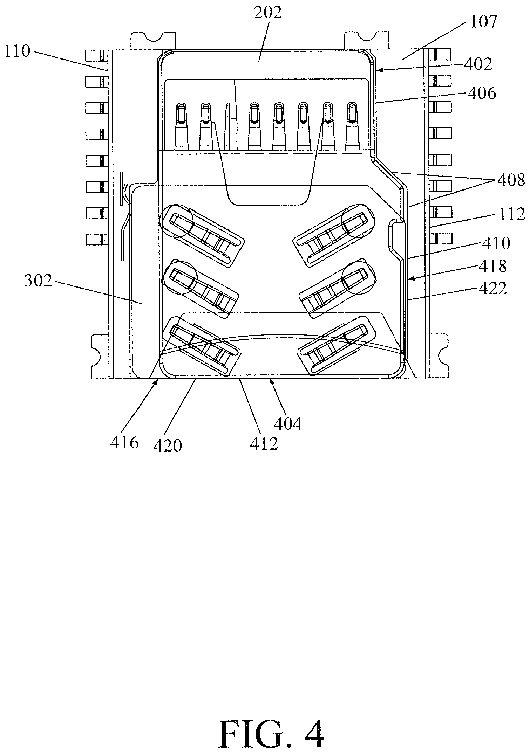

Refer to FIG. 4, which is a schematic assembly view of assembling the TF card 202 and the Nano-SIM card 302 in the TF card connector which is capable of installing a Nano-SIM card 302 according to one embodiment of the present invention. As shown in FIG. 4, the TF card 202 and the Nano-SIM card 302 are arranged in the TF card connector which is capable of installing a Nano-SIM card 302. The second card slot is opened and disposed on the bottom surface of the first card slot. The first card slot has a first longer side 402 and a first shorter side 404. The first longer side 402 includes a first portion 406 and a second portion 408 protruding out further to an outer side of the TF card 202 than the first portion 406, and the second portion 408 includes a third portion 410. A portion 412 of the first shorter side 404 and the third portion 410 of the first longer side 402 extend in corresponding directions perpendicular to each other. The first side 110 of the terminal retaining base 107 is parallel to the third portion 410 of the first longer side 402. The second card slot has a second longer side 416 and a second shorter side 418. Corresponding portions 420, 422 of the second longer side 416 and the second shorter side 418 extend in corresponding directions perpendicular to each other. The portion 420 of the second longer side 416 and the portion 412 of the first shorter side 404 overlap each other, and the portion 422 of the second shorter side 418 and the third portion 410 of the first longer side 402 overlap each other. The second side 112 of the terminal retaining base 107 is opposite to the first side 110 of the terminal retaining base 107. This maintains the structure of TF card connector so that the Nano-SIM card connector is arranged in the TF card connector to save the space for the mobile phone.

In one preferred embodiment of the TF card connector which is capable of installing a Nano-SIM card, the second ends of the first conducting terminals and the second ends of the second conducting terminals are disposed respectively in the same side of the terminal retaining base. By arranging the second ends of the first conducting terminals and the second ends of the second conducting terminals in the same side of the terminal retaining base, the installation position of the TF card connector which is capable of installing a Nano-SIM card is configured without restriction in order to arrange the TF card connector which is capable of installing a Nano-SIM card in the main board's edge of the mobile phone.

In one preferred embodiment of the TF card connector which is capable of installing a Nano-SIM card, the second ends of the first conducting terminals and the second ends of the second conducting terminals are disposed respectively in the different sides of the terminal retaining base. By arranging the second ends of the first conducting terminals and the second ends of the second conducting terminals in the different sides of the terminal retaining base, the connection strength between TF card connector which is capable of installing a Nano-SIM card and the mobile phone's main board is stronger for simplifying the difficulty of the circuit design of the main board in the mobile phone.

In one preferred embodiment of the TF card connector which is capable of installing a Nano-SIM card, there are eight second conducting terminals. Nano-SIM card is a new generation of SIM card in the mobile phone, which is smaller and thinner than the micro-SIM card. Based on the ETSI standard, the Nano-SIM card has to support eight kinds of circuits but not to require how to arrange the eight contact electrical pads. According to the ETSI standard, the eight second conducting terminals to allow the TF card connector which is capable of installing a Nano-SIM card to make them much more integrated with the world in order to enter the international market.

According to the above-mentioned descriptions, the invention discloses a TF card connector which is capable of installing a Nano-SIM card and a mobile phone thereof. The TF card connector is improved by arranging a Nano-SIM card connector in the TF card connector so that the functions are increased for the TF card connector. The mobile phone have the function of installing an SIM card by arranging the TF card connector capable of installing the Nano-SIM card in the mobile phone to increase the novel functions for the mobile phone such that the Nano-SIM card is used simply and conveniently after the Nano-SIM card is installed.

## Claims

1. A TF card connector which is capable of installing a Nano-SIM card (302), **characterized in that** the TF card connector comprises:
a terminal retaining base (107);
a first card slot disposed on the terminal retaining base (107) and adapted to a TF card (202), wherein the first card slot has a first longer side (402) and a first shorter side (404); wherein the first longer side (402) comprises a first portion (406) and a second portion (408) protruding out further to an outer side of the TF card (202) than the first portion (406), and the second portion (408) comprises a third portion (410); and wherein a portion (412) of the first shorter side (404) and the third portion (410) of the first longer side (402) extend in corresponding directions perpendicular to each other;
a plurality of first conducting terminals (108) disposed on the terminal retaining base (107), wherein a plurality of first ends (102) of the first conducting terminals (108) are disposed in the first card slot for connecting to the TF card (202) and a plurality of second ends (105) of the first conducting terminals (108) are disposed on a first side (110) of the terminal retaining base (107) for connecting to a main board of a mobile phone; and wherein the first side (110) of the terminal retaining base (107) is parallel to the third portion (410) of the first longer side (402);
a second card slot disposed on the terminal retaining base (107) and adapted to a Nano-SIM card (302), wherein the second card slot has a second longer side (416) and a second shorter side (418), wherein corresponding portions (420, 422) of the second longer side (416) and the second shorter side (418) extend in corresponding directions perpendicular to each other; and wherein the portion (420) of the second longer side (416) and the portion (412) of the first shorter side (404) overlap each other, and the portion (422) of the second shorter side (418) and the third portion (410) of the first longer side (402) overlap each other; and
a plurality of second conducting terminals disposed on the terminal retaining base, wherein a plurality of first ends (106) of the second conducting terminals (109) are disposed in the second card slot for connecting to the Nano-SIM card (302) and a plurality of second ends (104) of the second conducting terminals (109) are disposed on a second side (112) of the terminal retaining base (107) for connecting to the main board of the mobile phone; and wherein the second side (112) of the terminal retaining base (107) is opposite to the first side (110) of the terminal retaining base (107).

2. The TF card connector which is capable of installing the Nano-SIM card of claim 1, further **characterized in that** the TF card connector further comprises a Nano-SIM card identification switch (301) disposed on the terminal retaining base (107), wherein the Nano-SIM card identification switch (301) is closed when the Nano-SIM card (302) is inserted.

3. The TF card connector which is capable of installing the Nano-SIM card of claim 1, further **characterized in that** the TF card connector further comprises a TF card identification switch (203) disposed on the terminal retaining base (107), wherein the TF card identification switch (203) is closed when the TF card (202) is inserted.

4. The TF card connector which is capable of installing the Nano-SIM card of claim 1, **characterized in that** the second card slot is opened and disposed on a bottom surface of the first card slot.

5. The TF card connector which is capable of installing the Nano-SIM card of claim 1, **characterized in that** eight second conducting terminals are disposed on the TF card connector which is capable of installing the Nano-SIM card (302).

6. The TF card connector which is capable of installing the Nano-SIM card of claim 1, further **characterized in that** the TF card connector further comprises a pushing structure disposed on the terminal retaining base (107).

7. The TF card connector which is capable of installing the Nano-SIM card of claim 1, further **characterized in that** the TF card connector further comprises a plurality of embossment structures (101) disposed on the terminal retaining base (107).

8. A mobile phone, comprising the TF card connector which is capable of installing the Nano-SIM card (302) described in any one of claims 1 to 7.

## Patentansprüche

1. TF-Karten-Anschluss zur Installation einer Nano-SIM-Karte (302), **dadurch gekennzeichnet, dass** der TF-Karten-Anschluss umfasst:
eine Klemme-Haltebasis (107);
einen ersten Kartensteckplatz, der auf der Klemme-Haltebasis (107) angeordnet ist und für eine TF-Karte (202) geeignet ist, worin der erste Kartensteckplatz eine erste längere Seite (402) und eine erste kürzere Seite (404) hat; worin die erste längere Seite (402) einen ersten Abschnitt (406) und einen zweiten Abschnitt (408) umfasst, der weiter zu einer Außenseite der TF-Karte (202) hin als der erste Abschnitt (406) vorspringt, und der zweite Abschnitt (408) einen dritten Abschnitt (410) umfasst; und worin ein Abschnitt (412) der ersten kürzeren Seite (404) und der dritte Abschnitt (410) der ersten längeren Seite (402) sich in entsprechenden Richtungen erstrecken, die zueinander rechtwinklig sind;
eine Vielzahl von ersten leitenden Klemmen (108), die auf der Klemme-Haltebasis (107) angeordnet sind, worin eine Vielzahl von ersten Enden (102) der ersten leitenden Klemmen (108) im ersten Kartensteckplatz zur Verbindung mit der TF-Karte (202) angeordnet ist und eine Vielzahl von zweiten Enden (105) der ersten leitenden Klemmen (108) an einer ersten Seite (110) der Klemme-Haltebasis (107) zur Verbindung mit einer Hauptplatine eines Mobiltelefons angeordnet ist; und worin die erste Seite (110) der Klemme-Haltebasis (107) zum dritten Abschnitt (410) der ersten längeren Seite (402) parallel ist;
einen zweiten Kartensteckplatz, der auf der Klemme-Haltebasis (107) angeordnet ist und für eine Nano-SIM-Karte (302) geeignet ist, worin der zweite Kartensteckplatz eine zweite längere Seite (416) und eine zweite kürzere Seite (418) hat, worin entsprechende Abschnitte (420, 422) der zweiten längeren Seite (416) und die zweite kürzere Seite (418) sich in entsprechenden Richtungen erstrecken, die zueinander rechtwinklig sind; und worin der Abschnitt (420) der zweiten längeren Seite (416) und der Abschnitt (412) der ersten kürzeren Seite (404) sich einander überlappen, und der Abschnitt (422) der zweiten kürzeren Seite (418) und der dritte Abschnitt (410) der ersten längeren Seite (402) sich einander überlappen; und
eine Vielzahl von zweiten leitenden Klemmen, die auf der Klemme-Haltebasis angeordnet sind, worin eine Vielzahl von ersten Enden (106) der zweiten leitenden Klemmen (109) im zweiten Kartensteckplatz zur Verbindung mit der Nano-SIM-Karte (302) angeordnet ist und eine Vielzahl von zweiten Enden (104) der zweiten leitenden Klemmen (109) an einer zweiten Seite (112) der Klemme-Haltebasis (107) zur Verbindung mit der Hauptplatine des Mobiltelefons angeordnet ist; und worin die zweite Seite (112) der Klemme-Haltebasis (107) der ersten Seite (110) der Klemme-Haltebasis (107) gegenüberliegt.

2. TF-Karten-Anschluss zur Installation der Nano-SIM-Karte nach Anspruch 1, ferner **dadurch gekennzeichnet, dass** der TF-Karten-Anschluss ferner einen Nano-SIM-Karten-Identifikationsschalter (301) umfasst, der auf der Klemme-Haltebasis (107) angeordnet ist, worin der Nano-SIM-Karten-Identifikationsschalter (301) geschlossen ist, wenn die Nano-SIM-Karte (302) eingefügt ist.

3. TF-Karten-Anschluss zur Installation der Nano-SIM-Karte nach Anspruch 1, ferner **dadurch gekennzeichnet, dass** der TF-Karten-Anschluss ferner einen TF-Karten-Identifikationsschalter (203) umfasst, der auf der Klemme-Haltebasis (107) angeordnet ist, worin der TF-Karten-Identifikationsschalter (203) geschlossen ist, wenn die TF-Karte (202) eingefügt ist.

4. TF-Karten-Anschluss zur Installation der Nano-SIM-Karte nach Anspruch 1, **dadurch gekennzeichnet, dass** der zweite Kartensteckplatz geöffnet und auf einer Grundfläche des ersten Kartensteckplatzes angeordnet ist.

5. TF-Karten-Anschluss zur Installation der Nano-SIM-Karte nach Anspruch 1, **dadurch gekennzeichnet, dass** acht zweite leitende Klemmen auf dem TF-Karten-Anschluss zur Installation der Nano-SIM-Karte (302) angeordnet sind.

6. TF-Karten-Anschluss zur Installation der Nano-SIM-Karte nach Anspruch 1, ferner **dadurch gekennzeichnet, dass** der TF-Karten-Anschluss ferner eine Schiebestruktur umfasst, die auf der Klemme-Haltebasis (107) angeordnet ist.

7. TF-Karten-Anschluss zur Installation der Nano-SIM-Karte nach Anspruch 1, ferner **dadurch gekennzeichnet, dass** der TF-Karten-Anschluss ferner eine Vielzahl von Prägestrukturen (101) umfasst, die auf der Klemme-Haltebasis (107) angeordnet ist.

8. Mobiltelefon, umfassend den TF-Karten-Anschluss zur Installation der Nano-SIM-Karte (302) nach einem der Ansprüche 1 bis 7.

## Revendications

1. Connecteur de carte TF qui est capable d'installer une carte Nano-SIM (302), **caractérisé en ce que** le connecteur de carte TF comprend :
une base de retenue de bornes (107) ;
une première fente de carte disposée sur la base de retenue de bornes (107) et adaptée à une carte TF (202), où la première fente de carte a un premier côté plus long (402) et un premier côté plus court (404) ; où le premier côté plus long (402) comprend une première partie (406) et une deuxième partie (408) faisant saillie davantage vers un côté extérieur de la carte TF (202) que la première partie (406), et la deuxième partie (408) comprend une troisième partie (410) ; et où une partie (412) du premier côté plus court (404) et la troisième partie (410) du premier côté plus long (402) s'étendent dans des directions correspondantes perpendiculaires l'une à l'autre ;
une pluralité de premières bornes conductrices (108) disposées sur la base de retenue de bornes (107), où une pluralité de premières extrémités (102) des premières bornes conductrices (108) sont disposées dans la première fente de carte pour se connecter à la carte TF (202) et une pluralité de secondes extrémités (105) des premières bornes conductrices (108) sont disposées sur un premier côté (110) de la base de retenue de bornes (107) pour se connecter à une carte principale d'un téléphone mobile ; et où le premier côté (110) de la base de retenue de bornes (107) est parallèle à la troisième partie (410) du premier côté plus long (402) ;
une seconde fente de carte disposée sur la base de retenue de terminal (107) et adaptée à une carte Nano-SIM (302), où la seconde fente de carte a un second côté plus long (416) et un second côté plus court (418), où des parties correspondantes (420, 422) du second côté plus long (416) et du second côté plus court (418) s'étendent dans des directions correspondantes perpendiculaires l'une à l'autre ; et où la partie (420) du second côté plus long (416) et la partie (412) du premier côté plus court (404) se chevauchent l'une l'autre, et la partie (422) du second côté plus court (418) et la troisième partie (410) du premier côté plus long (402) se chevauchent l'une l'autre ; et
une pluralité de secondes bornes conductrices disposées sur la base de retenue de bornes, où une pluralité de premières extrémités (106) des secondes bornes conductrices (109) sont disposées dans la seconde fente de carte pour se connecter à la carte Nano-SIM (302) et une pluralité de secondes extrémités (104) des secondes bornes conductrices (109) sont disposées sur un second côté (112) de la base de retenue de bornes (107) pour se connecter à la carte principale du téléphone mobile ; et où le second côté (112) de la base de retenue de bornes (107) est opposé au premier côté (110) de la base de retenue de bornes (107).

2. Connecteur de carte TF qui est capable d'installer la carte Nano-SIM selon la revendication 1, **caractérisé en outre en ce que** le connecteur de carte TF comprend en outre un commutateur d'identification de carte Nano-SIM (301) disposé sur la base de retenue de bornes (107), où le commutateur d'identification de carte Nano-SIM (301) est fermé lorsque la carte Nano-SIM (302) est insérée.

3. Connecteur de carte TF qui est capable d'installer la carte Nano-SIM selon la revendication 1, **caractérisé en outre en ce que** le connecteur de carte TF comprend en outre un commutateur d'identification de carte TF (203) disposé sur la base de retenue de bornes (107), où le commutateur d'identification de carte TF (203) est fermé lorsque la carte TF (202) est insérée.

4. Connecteur de carte TF qui est capable d'installer la carte Nano-SIM selon la revendication 1, **caractérisé en ce que** la seconde fente de carte est ouverte et disposée sur une surface inférieure de la première fente de carte.

5. Connecteur de carte TF qui est capable d'installer la carte Nano-SIM selon la revendication 1, **caractérisé en ce que** huit secondes bornes conductrices sont disposées sur le connecteur de carte TF qui est capable d'installer la carte Nano-SIM (302).

6. Connecteur de carte TF qui est capable d'installer la carte Nano-SIM selon la revendication 1, **caractérisé en outre en ce que** le connecteur de carte TF comprend en outre une structure de poussée disposée sur la base de retenue de bornes (107).

7. Connecteur de carte TF qui est capable d'installer la carte Nano-SIM selon la revendication 1, **caractérisé en outre en ce que** le connecteur de carte TF comprend en outre une pluralité de structures en relief (101) disposées sur la base de retenue de bornes (107).

8. Téléphone mobile, comprenant le connecteur de carte TF qui est capable d'installer la carte Nano-SIM (302) décrite dans l'une quelconque des revendications 1 à 7.
